# EUROPÄISCHE PATENTANMELDUNG

(11) **EP 2 090 603 A2**
(43) Veröffentlichungstag der Anmeldung: **19.08.2009**
(21) Anmeldenummer: 09001798.9
(22) Anmeldetag: 10.02.2009
(51) Int. Cl.: C08G 18/66, C08G 18/72, C09J 175/04

(54) **Dispersionsklebstoffe**

(30) Priorität: 15.02.2008 DE 102008009517
(71) Anmelder: Bayer MaterialScience AG, 51368 Leverkusen (DE)
(72) Erfinder: Kraus, Harald, Dr., 51371 Leverkusen (DE); Henning, Wolfgang, Dr., 51515 Kürten (DE); Arndt, Wolfgang, 41542 Dormagen (DE)

(57) **Zusammenfassung**

Die Erfindung betrifft wässrige Dispersionsklebstoffe auf Basis einer Mischung wässriger Polyurethan- bzw. Polyurethan-Harnstoffdispersionen, ein Verfahren zu deren Herstellung, sowie die Verwendung der Dispersionsklebstoffe zur Herstellung von Klebstoffverbünden.

## Beschreibung

Die Erfindung betrifft wässrige Dispersionsklebstoffe auf Basis einer Mischung wässriger Polyurethan- bzw. Polyurethan-Harnstoffdispersionen, ein Verfahren zu deren Herstellung, sowie die Verwendung der Dispersionsklebstoffe zur Herstellung von Klebstoffverbünden.

Klebstoffe auf Basis von wässrigen Polyurethan-Dispersionen haben sich weltweit in anspruchsvollen industriellen Anwendungen etabliert, zum Beispiel bei der Schuhfertigung, der Verklebung von Teilen für die KFZ-Innenausstattung, der Folienlaminierung oder der Verklebung von textilen Substraten. Die Herstellung wässriger Polyurethan- bzw. Polyurethan-Polyharnstoff-Dispersionen ist bekannt.

Bei der Verwendung solcher Dispersionen zum Kleben von Substraten wird häufig nach dem Thermoaktivierverfahren gearbeitet. Hierbei wird die Dispersion auf das Substrat aufgebracht, und nach vollständiger Verdunstung des Wassers wird die Klebstoffschicht durch Erwärmen, z. B. mit einem Infrarotstrahler, aktiviert und in einen klebfähigen Zustand überführt. Die Temperatur, bei der der Klebstofffilm klebrig wird, bezeichnet man als Aktiviertemperatur.

Klebstoffe auf Basis von wässrigen Polyurethan- bzw. Polyurethan-Polyharnstoff-Dispersionen, welche für die Anwendung des Thermoaktivierverfahrens geeignet sind, werden in der US-A 4 870 129 beschrieben. Danach können durch Verwendung spezieller Mischungen von Diisocyanaten nach dem Acetonverfahren wässrige Polyurethan- bzw. Polyurethan-Polyharnstoff-Dispersionen erhalten werden, die daraus erhältlichen Filme weisen eine gute Aktivierbarkeit auf.

Bei der Verwendung von Polyurethan- bzw. Polyurethan-Polyharnstoff-Dispersionen kann aber auch nach dem Verfahren der Nassverklebung gearbeitet werden, d.h. die Durchführung der Verklebung erfolgt unmittelbar nach dem Klebstoffauftrag. Bis zum Abbinden des Klebstoffes ist eine mechanische Fixierung der zu verbindenden Teile erforderlich. Dieses Verfahren wird häufig zur Verklebung von Holz oder textilen Substraten verwendet.

Auch Mischungen von Polyurethan-Dispersionen sind bekannt. Beispielsweise werden in der US-A 6,797,764 Mischungen spezieller polyesterbasierter Polyurethandispersionen mit Sulfonatgruppen und wässrigen aliphatischen Polyurethandispersionen beschrieben. Diese weisen nach dem Thermoaktivierverfahren eine gute Haftfestigkeit auf einer Vielzahl von Metall- und Plastiksubstraten auf.

Die Aufgabe der vorliegenden Erfindung bestand in der Bereitstellung von Dispersionsklebstoffen, welche sowohl nach dem Thermoaktivierverfahren als auch nach dem Verfahren der Nassverklebung hervorragende Klebeigenschaften zeigen.

Überraschend wurde nun gefunden, dass die nachstehend beschriebenen Mischungen wässriger Polyurethan- bzw. Polyurethan-Polyharnstoff-Dispersionen sich als Klebstoffe sowohl nach dem Thermoaktivierverfahren als auch nach dem Verfahren der Nassverklebung eignen und Klebefestigkeiten zeigen, die besser sind als die der Einzelkomponenten.

Gegenstand der vorliegenden Erfindung sind somit wässrige Dispersionen enthaltend eine Mischung aus
A) einer wässrigen Polyurethan- bzw. Polyurethan-Harnstoff-Dispersion enthaltend,
   I. ein Polymer A) aufgebaut aus
      I(i). mindestens einem difunktionellen aliphatischen Polyesterpolyol mit einem Molekulargewicht von 400 bis 5000 g/mol,
      I(ii). mindestens einer Mischung aus Hexamethylendiisocyanat (HDI) und 1-Isocyanato-3,3,5-trimethyl-5-isocyanatomethyl-cyclohexan (IPDI) und
      I(iii). mindestens einem Gemisch aus zwei oder mehr aminischen Kettenverlängeren, wobei zumindest eine Verbindung eine ionische Gruppe trägt,
         wobei das Polymer A) nach der Trocknung teilkristallin oder kristallin ist mit einem Glasübergang bei einer Glastemperatur Tg zwischen -65°C und -40°C,
B) einer von A) verschiedenen wässrigen Polyurethan- bzw. Polyurethan-Harnstoff-Dispersion enthaltend,
   II. Polymer B) aufgebaut aus
      II(i). mindestens einem difunktionellen aromatischen Polyesterpolyol mit einem Molekulargewicht von 400 bis 5000 g/mol,
      II(i). mindestens einer difunktionellen Polyolkomponente mit einem Molekulargewicht von 62 bis 399,
      II(i). mindestens einem aliphatischen Diisocyanat und
      II(i). mindestens einem aminischen Kettenverlängerer mit einer ionischen Gruppe,
      wobei das Polymer B) nach der Trocknung amorph ist mit einem Glasübergang bei einer Glastemperatur Tg zwischen -15°C und +10°.

Die erfindungsgemäßen wässrigen Dispersionen enthalten eine Mischung aus 30 bis 90 Gew.-%, bevorzugt 45 bis 75 Gew.-%, besonders bevorzugt 55 bis 65 Gew.-%, ganz besonders bevorzugt 60 Gew.-% der wässrigen Polyurethan- bzw. Polyurethan-Harnstoff-Dispersion, enthaltend Polymer A) und 10 bis 70 Gew.-%, bevorzugt 25 bis 55 Gew.-%, besonders bevorzugt 35 bis 45 Gew.-% , ganz besonders bevorzugt 40 Gew.-% der wässrigen Polyurethan- bzw. Polyurethan-Harnstoff-Dispersion, enthaltend Polymer B).

Als geeignete difunktionelle aliphatische Polyesterpolyole A(Ii) kommen insbesondere lineare Polyesterdiole in Betracht, wie sie in bekannter Weise aus aliphatischen oder cycloaliphatischen Dicarbonsäuren, wie z.B. Bernstein-, Methylbernstein-, Glutar-, Adipin-, Pimelin-, Kork-, Azelain-, Sebacin-, Nonandicarbon-, Decandicarbon-, Tetrahydrophthal-, Hexahydrophthal-, Cyclohexandicarbon-, Malein-, Fumar-, Malon- oder deren Gemische mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,4-Dimethylolcyclohexan, 1,8-Octandiol, 1,10-Decandiol, 1,12-Dodecandiol oder deren Gemische hergestellt werden können. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Bevorzugt sind difunktionelle aliphatische Polyesterpolyole A(Ii) auf Basis Bernsteinsäure, Methylbemsteinsäure, Glutarsäure, Adipinsäure oder Maleinsäure und 1,3-Propandiol, 1,4-Butandiol oder 1,6-Hexandiol.

Besonders bevorzugt sind difunktionelle aliphatische Polyesterpolyole A(Ii) auf Basis Adipinsäure und 1,4-Butandiol oder 1,6-Hexandiol.

Ganz besonders bevorzugt sind difunktionelle aliphatische Polyesterpolyole A(Ii) auf Basis Adipinsäure und 1,4-Butandiol.

Das Molekulargewicht des difunktionellen aliphatischen Polyesterpolyols A(Ii) liegt zwischen 400 und 5000 g/mol, bevorzugt zwischen 1500 und 3000 g/mol, besonders bevorzugt zwischen 1900 und 2500 g/mol, ganz besonders bevorzugt zwischen 2100 und 2300 g/mol.

Als Isocyanatkomponente A(Iii) wird eine Mischung aus Hexamethylendiisocyanat (HDI) und 1-Isocyanato-3,3,5-trimethyl-5-isocyanatomethyl-cyclohexan (IPDI) eingesetzt. Das Molverhältnis HDI : IPDI liegt bevorzugt zwischen 9:1 und 1:9, besonders bevorzugt zwischen 3:1 und 1:3, ganz besonders bevorzugt beträgt es 2:1.

Die Komponente A(Iiii) besteht aus einem Gemisch aus zwei oder mehr aminischen Kettenverlängeren, wobei zumindest eine Verbindung eine ionische Gruppe trägt. Unter Kettenverlängerer im Sinne der Erfindung sind auch Monoamine gemeint, die zum Kettenabbruch führen.

Beispiele für Monoamine sind aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin oder 2-Propanolamin. Weitere Beispiele sind Monoaminoverbindungen, die zusätzlich Sulfonsäure- und/oder Carboxylgruppen tragen, wie beispielsweise Taurin, Glycin oder Alanin.

Beispiele für Diaminoverbindungen sind 1,2-Ethandiamin, 1,6-Hexamethylendiamin, 1-Amino-3,3,5-trimethyl-5-aminomethyl-cyclohexan (Isophorondiamin), Piperazin 1,4-Diaminocyclohexan oder Bis-(4-aminocyclohexyl)-methan. Weiterhin kommen Adipinsaeuredihydrazid, Hydrazin bzw. Hydrazinhydrat in Frage. Auch Polyamine wie Diethylentriamin können anstelle einer Diaminoverbindung als Aufbaukomponente eingesetzt werden.

Weitere Beispiele sind Aminoalkohole, d.h. Verbindungen, die in einem Molekül Amino- und Hydroxylgruppen enthalten, wie z. B. 1,3-Diamino-2-propanol, N-(2-Hydroxyethyl)-ethylendiamin oder N,N-Bis(2-Hydroxyethyl)-ethylendiamin.

Beispiele für Diaminoverbindungen mit einer ionischen Gruppe, die also zusätzlich Sulfonat- und/oder Carboxylatgruppen tragen, sind beispielsweise die Natrium- oder Kaliumsalze der N-(2-Aminoethyl)-2-aminoethansulfonsäure/ -carbonsäure, der N-(3-Aminopropyl)-2-aminoethansulfonsäure/ -carbonsäure, der N-(3-Aminoproyl)-3-aminopropansulfonsäure/ - carbonsäure oder der N-(2-Aminoethyl)-3-aminopropansulfonsäure/ -carbonsäure. Bevorzugt ist das Natriumsalz der N-(2-Aminoethyl)-2-aminoethansulfonsäure.

Bevorzugte Bestandteile des Gemischs A(Iiii) sind Diethanolamin, 1,2-Ethandiamin, 1-Amino-3,3,5-trimethyl-5-aminomethyl-cyclohexan (Isophorondiamin), Piperazin, N-(2-Hydroxyethyl)-ethylendiamin und die Natriumsalze der N-(2-Aminoethyl)-2-aminoethansulfonsäure/- carbonsäure.

Besonders bevorzugt ist ein Gemisch aus 1,2-Ethandiamin und dem Natriumsalz der N-(2-Aminoethyl)-2-aminoethansulfonsäure. Bevorzugt wird dieses Gemisch in einem Molverhältnis zwischen 6:1 und 1:6 eingesetzt, besonders bevorzugt in einem Molverhältnis zwischen 2:1 und 1:4, ganz besonders bevorzugt in einem Molverhältnis zwischen 1:3 und 1:4.

Das Polymer A) ist nach der Trocknung teilkristallin oder kristallin mit einem Glasübergang bei einer Glastemperatur Tg zwischen -65°C und -40°C, bevorzugt mit einer Tg zwischen -60°C und -45°C, besonders bevorzugt zwischen -55°C und -50°C.

Als geeignete difunktionelle aromatische Polyesterpolyole B(IIi) kommen insbesondere lineare Polyesterdiole in Betracht, wie sie in bekannter Weise aus aromatischen Dicarbonsäuren, wie z.B. Terephthal-, Isophthal- oder o-Phthalsäure sowie deren Säureanhydride, wie z.B. o-Phthalsäureanhydrid, mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, 1,4-Butandiol, 1,3-Butandiol, 2,3-Butandiol, 1,5-Pentandiol, 1,6-Hexandiol, 2,2-Dimethyl-1,3-propandiol, 1,4-Dihydroxycyclohexan, 1,4-Dimethylolcyclohexan, 1,8-Octandiol, 1,10-Decandiol, 1,12-Dodecandiol oder deren Gemische hergestellt werden können.

Bevorzugt sind difunktionelle aromatische Polyesterpolyole B(IIi) auf Basis o-Phthalsäure, o-Phthalsäureanhydrid und 1,4-Butandiol oder 1,6-Hexandiol.

Besonders bevorzugt sind difunktionelle aromatische Polyesterpolyole B(IIi) auf Basis o-Phthalsäure oder o-Phthalsäureanhydrid und 1,6-Hexandiol.

Das Molekulargewicht des difunktionellen aromatischen Polyesterpolyols B(IIi) liegt zwischen 400 und 5000 g/mol, bevorzugt zwischen 1500 und 3000 g/mol, besonders bevorzugt zwischen 1800 und 2300 g/mol, ganz besonders bevorzugt zwischen 1900 und 2100 g/mol.

Als Aufbaukomponente B(IIii) geeignete difunktionelle Polyolkomponenten mit einem Molekulargewicht von 62 bis 399 und sind beispielsweise die unter A(Ii) und B(IIi) aufgeführten Produkte, soweit sie ein Molekulargewicht von 62 bis 399 Dalton aufweisen. Weitere geeignete Komponenten sind die zur Herstellung der Polyesterpolyole genannten mehrwertigen, insbesondere zweiwertigen Alkohole sowie weiterhin niedermolekulare Polyesterdiole wie z.B. Adipinsäure-bis-(hydroxyethyl)-ester. Auch kurzkettige difunktionelle Polyetherpolyole, wie z.B. die Homo-, Misch- und Propfpolymerisate des Ethylenoxid oder des Propylenoxid, kommen in Frage.

Bevorzugte Aufbaukomponenten B(IIii) sind 1,4-Butandiol und 1,6-Hexandiol, besonders bevorzugt ist 1,6-Hexandiol.

Als Aufbaukomponenten B(IIiii) sind beliebige aliphatische Verbindungen geeignet, die mindestens zwei freie Isocyanatgruppen pro Molekül aufweisen. Bevorzugt werden Diisocyanate Y(NCO)₂ eingesetzt, wobei Y für einen zweiwertigen aliphatischen Kohlenwasserstoffrest mit 4 bis 12 Kohlenstoffatomen oder einen zweiwertigen cycloaliphatischen Kohlenwasserstoffrest mit 6 bis 15 Kohlenstoff-Atomen steht. Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1 -Isocyanato-3,3,5-trimethyl-5-isocyanatomethyl-cyclohexan, 4,4'-Diisocyanato-dicyclohexyl-methan oder 4,4'-Diisocyanatodicyclohexylpropan-(2,2) oder Gemische davon.

Besonders bevorzugt sind Hexamethylendiisocyanat (HDI), 1-Isocyanato-3,3,5-trimethyl-5-isocyanatomethyl-cyclohexan (IPDI) sowie 4,4'-Diisocyanato-dicyclohexyl-methan und Gemische davon. Bevorzugt werden die Isocyanate jedoch allein eingesetzt.

Ganz besonders bevorzugt ist Hexamethylendiisocyanat (HDI).

Aminische Kettenverlängerer B(IIiv) mit einer ionischen Gruppe sind bevorzugt Diaminoverbindungen, die zusätzlich Sulfonat- und/oder Carboxylatgruppen tragen, wie beispielsweise die Natrium- oder Kaliumsalze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-aminopropansulfonsäure oder der analogen Carbonsäuren.

Besonders bevorzugt sind die Natriumsalze der N-(2-Aminoethyl)-2-aminoethansulfonsäure und der analogen Carbonsäure, ganz besonders bevorzugt ist das Natriumsalz der N-(2-Aminoethyl)-2-aminoethansulfonsäure.

Die aminischen Kettenverlängerer B(IIiv) mit einer ionischen Gruppe können alleine oder zusammen mit anderen aminischen Kettenverlängeren, wie sie beispielsweise unter A(Iiii) beschrieben wurden, eingesetzt werden. Bevorzugt werden sie alleine eingesetzt.

Das Polymer B) ist nach der Trocknung amorph mit einem Glasübergang bei einer Glastemperatur Tg zwischen -15°C und +10°, bevorzugt mit einer Tg zwischen -10°C und +5°C, besonders bevorzugt zwischen -5°C und 0°C.

Die wässrigen Polyurethan- bzw. Polyurethan-Harnstoff-Dispersion enthaltend die Polymere A) oder B) haben einen Festkörpergehalt von 10 bis 70 Gew.-%, bevorzugt von 25 bis 60 Gew.-% und besonders bevorzugt von 35 bis 55 Gew.-%.

Die in den wässrigen Polyurethan- bzw. Polyurethan-Harnstoff-Dispersionen enthaltenen Polymere A) oder B) werden bevorzugt nach dem Acetonverfahren hergestellt. Dazu werden Prepolymere aus den Komponenten A(Ii) und A(Iii) bzw. B(IIi), B(IIii) und B(IIiii) hergestellt, in Aceton gelöst und mit den Komponenten A(Iiii) bzw. B(IIiv) kettenverlängert. Nach der Dispergierung mit Wasser wird das Aceton abdestilliert. Die Anwendung und Durchführung des Acetonverfahrens ist Stand der Technik und dem Fachmann bekannt.

Gegenstand der vorliegenden Erfindung ist weiterhin ein Verfahren zur Herstellung der erfindungsgemäßen Dispersionen, dadurch gekennzeichnet, dass die wässrigen Polyurethan- bzw. Polyurethan-Harnstoff-Dispersion der Polymere A) bzw. B) miteinander gemischt werden.

Die Verklebungen, hergestellt mit den erfindungsgemäßen Dispersionen, zeigen bei einer einkomponentigen Verklebung von Buchenholzsubstraten nach dem Verfahren der Nassverklebung nach 3 Tagen gute Schälfestigkeiten von >4N/mm², bevorzugt von >4,2 N/mm², besonders bevorzugt von > 4,5 N/mm². Bei der einkomponentigen Verklebung einer Hart-PVC-Folie auf Buchenholz nach dem Thermoaktivierverfahren bei 100°C Thermoaktiviertemperatur werden nach 3 Tagen Schälfestigkeiten von >3,4N/mm², bevorzugt von >3,5 N/mm², besonders bevorzugt von > 3,6 N/mm² erhalten. Einkomponentig im Sinne der Erfindung bedeutet ohne Zusatz einer zusätzlichen Vernetzerkomponente wie z.B. Isocyanate oder Carbodiimide. Die erfindungsgemäßen Dispersionsklebstoffe sind jedoch prinzipiell auch für Anwendungen unter Zusatz einer Vernetzerkomponente geeignet.

Ebenfalls Gegenstand der vorliegenden Erfindung ist die Verwendung der erfindungsgemäßen wässrigen Dispersionen zur Herstellung von Klebstoffzusammensetzungen.

Die Klebstoffzusammensetzungen enthaltend die erfindungsgemäßen Dispersionen können alleine oder mit den in der Beschichtungs- und Klebstofftechnologie bekannten Bindemitteln, Hilfsstoffen und Zugschlagstoffen, insbesondere Emulgatoren und Lichtschutzmitteln wie UV-Absorbern und sterisch gehinderte Aminen (HALS), weiterhin Antioxidantien, Füllstoffen und Hilfsmitteln, z.B. Antiabsetzmittenl, Entschäumungs- und/oder Netzmitteln, Verlaufmitteln, Reaktiv-Verdünner, Weichmachern, Katalysatoren, Hilfslösemitteln und/oder Verdickem und Additiven, wie beispielsweise Pigmente, Farbstoffe oder Mattierungsmittel eingesetzt werden. Auch Klebrigmacher ("Tackifier") können zugegeben werden.

Die Additive können den erfindungsgemäßen Dispersionen unmittelbar vor der Verarbeitung zugegeben werden. Es ist aber auch möglich, zumindest einen Teil der Additive vor oder während der Dispergierung des Bindemittels zuzugeben.

Die Auswahl und die Dosierung dieser Stoffe, die den Einzelkomponenten und/oder der Gesamtmischung zugegeben werden können, sind dem Fachmann prinzipiell bekannt und können ohne ungebührlich hohen Aufwand auf den speziellen Anwendungsfall zugeschnitten durch einfache Vorversuche ermittelt werden.

Ebenfalls Gegenstand der vorliegenden Erfindung sind Zweikomponenten(2K)-Klebstoffzusammensetzungen, enthaltend die erfindungsgemäßen Dispersionen und mindestens eine Polyisocyanatverbindungen mit mindestens zwei Isocyanatgruppen pro Molekül. Das Polyisocanat wird dabei vor der Anwendung zugesetzt (2K-Verarbeitung). Bevorzugt werden in diesem Fall Polyisocyanatverbindungen eingesetzt, die in Wasser emulgierbar sind. Dies sind z.B. die in der EP-A 0 206 059, DE-A 31 12 117 oder DE-A 100 24 624 beschriebenen Verbindungen. Eingesetzt werden die Polyisocyanatverbindungen in einer Menge von 0,1 bis 20 Gew.-%, bevorzugt 0,5 bis 10 Gew.-%, besonders bevorzugt 1,5 bis 6 Gew.-%, bezogen auf die wässrige Dispersion.

Insbesondere werden mit den erfindungsgemäßen Dispersionen Klebstoffzusammensetzungen hergestellt, die sich zur Herstellung von Klebstoffverbünden eignen, wobei der Klebstoffverbund ein Substrat, die erfindungsgemäße Dispersion und ein Flächengebilde enthält. Substrat und Flächengebilde können dabei aus den gleichen oder unterschiedlichen Materialien bestehen.

Die erfindungsgemäßen Dispersionen zeichnen sich durch eine ausgezeichnete Haftung zu unterschiedlichsten Substraten und Flächengebilden aus, wie zum Beispiel zu Holz, Papier, Leder, Textilien, Kork, Kunststoffen wie unterschiedlichen Polyvinylchloridqualitäten, Polyurethanen, Polyvinylacetat, Kautschuken, Polyethylvinylacetat, Glasfasern, Glasfaser-, Kohlefaser und Mineralfasergeweben und -gewirken sowie zu mineralischen Materialien wie Steine, Beton, Gips oder Putze.

Die Klebstoffzusammensetzungen, enthaltend die erfindungsgemäßen Dispersionen eignen somit sich zum Verkleben beliebiger Substrate und Flächengebilde, bevorzugt aus den oben genannten Materialen.

Besonders eignen sich die erfindungsgemäßen Klebstoffe zum Kleben von Substraten und Flächengebilden aus Holz.

Weiterhin eignen sie sich zum Verkleben von Sohlen auf Basis von Polyvinylchlorid, insbesondere weichmachehaltigem Polyvinylchlorid oder von Polyethylvinylacetat- oder Polyurethan-Elastomerschaum mit Schuhschäften aus Leder oder Kunstleder und zur Verklebung von Folien auf Basis Polyvinylchlorid oder weichmacherhaltigem Polyvinylchlorid mit Holz.

Die Klebstoffzusammensetzungen, enthaltend die erfindungsgemäßen Dispersionen eignen sich auch zum Kleben von Glasfaser-, Kohlefaser- oder Mineralfasergewebeverbünden und -gewirken auf z.B. mineralische Untergründe wie Steine, Beton, Gips oder Putze. Dadurch können beispielsweise Gebäude oder Bauwerke besser gegen Zerstörung durch mechanische Einflüsse oder Erschütterungen, wie beispielsweise Erdbeben geschützt werden. Diese Anwendung ist besonders bevorzugt.

Ein Klebstoffverbund, enthaltend mit den erfindungsgemäßen Dispersionen verklebte Substrate und Flächengebilde sind ebenfalls Gegenstand der vorliegenden Anmeldung.

Die Verarbeitung der erfindungsgemäßen Klebstoffe erfolgt nach den bekannten Methoden der Klebstofftechnologie bezüglich der Verarbeitung von wässrigen Dispersionsklebstoffen.

### Beispiele

Nachstehend wird die Erfindung anhand der Beispiele näher erläutert. Die Schälfestigkeiten nach Anwendung des Verfahrens der Nassverklebung und des Thermoaktivierverfahrens können nach folgenden Methoden bestimmt werden:

### A) Bestimmung der Schälfestigkeit nach Anwendung des Verfahrens der Nassverklebung

Die Bestimmung wird einkomponentig (ohne Vernetzer) durchgeführt.

### Prüfmaterial/Prüfkörper

Buchenholz (gehobelt) / Buchenholz (gehobelt), Abmessungen: 40 x 20 x 5 mm

### Klebung und Messung

Die Klebstoffdispersion wird mittels eines Pinsels auf beide Buchenholzprüfkörper aufgetragen. Die Klebfläche beträgt 10 x 20 mm. Anschließend werden die beiden Prüfkörper übereinander gelegt und 72 h bei Raumtemperatur und 5 bar Druck gefügt.

Anschließend werden die Prüfkörper bei Raumtemperatur im Winkel von 180°C zur Klebefuge belastet und mit einer Geschwindigkeit von 100 mm pro Minute abgezogen. Die dafür benötigte Kraft (=Schälfestigkeit, Zugscherfestigkeit) wird gemessen. Es wird eine Fünffachbestimmung durchgeführt und der Durchschnittswert angegeben.

### B) Bestimmung der Schälfestigkeit nach Anwendung des Thermoaktivierverfahrens

1K-Klebung: Klebstoff ohne Vernetzer

### Prüfmaterial/Prüfkörper

a) Buchenholz (gehobelt)
   Abmessungen: 30 x 210 x 4,0 mm
b) Hart-PVC-Kaschierfolie (Benelit RTF; Benecke-Kaliko AG, Hannover/D)
   Abmessungen: 30 × 210 × 0,4 mm

### Klebung und Messung

Die Klebstoffdispersion wird mittels eines Pinsels auf den Buchenholzprüfkörper aufgetragen. Die Klebfläche beträgt 30 x 90 mm. Nach einer Trocknungszeit von 30 Minuten bei Raumtemperatur wird eine zweite Klebstoffschicht über die erste aufgetragen und anschließend 60 Minuten bei Raumtemperatur getrocknet. Anschließend werden die beiden Prüfkörper übereinander gelegt und 10 s bei 4 bar Druck und 100°C gefügt.

Nach dreitägiger Lagerung der Prüfkörper bei Raumtemperatur wird die PVC-Folie im Winkel von 180°C zur Klebefuge mit einer Geschwindigkeit von 30 mm pro Minute abgezogen und die dafür benötigte Kraft (=Schälfestigkeit) gemessen. Es wird eine Doppelbestimmung durchgeführt und der Durchschnittswert angegeben.

C) Die Glastemperaturen wurden mittels Differential Scanning Calorimetry (DSC) mit einem Kalorimeter Pyris Diamond DSC der Firma Perkin-Elmer bestimmt. Dazu wurde ein Film durch Rakeln der Dispersion mit 100 µm Nassfilmdichte auf eine Glasplatte hergestellt und dieser 3 Tage bei Raumtemperatur und 0% Raumfeuchte in einer Trockenbox getrocknet. Anschließend wurde mit 10 mg Probenmaterial die DSC-Kurve mit folgenden Messbedingungen aufgenommen: Schnelle Abkühlung auf die Starttemperatur -100°C, danach Beginn von drei Aufheizungen von -100°C bis +150°C mit einer Heizrate von 20K/min und einer Kühlrate von 320K/min unter Helium-athmosphäre und Kühlung mit flüssigem Stickstoff. Die Glastemperatur entspricht der Temperatur bei halber Höhe des Glasübergangs.

### Einsatzstoffe

- Dispersion I:: VP KA 8481 (Bayer MaterialScience AG, Leverkusen/D) Sulfonatstabilisierte Polyurethan-Dispersion auf Basis eines Adipinsäure-/Butandiol-Polyesters und einer Mischung aus Hexamethylendiisocyanat (HDI) und Isophorondiisocyanat (IPDI) (Festkörpergehalt der Dispersion ca. 40%). Das enthaltene Polymer ist nach der Trocknung teilkristallin mit einem Glasübergang bei einer Glastemperatur Tg von -52,5°C.
- Dispersion II:: Dispercoll^{®} U42 (Bayer MaterialScience AG, Leverkusen/D) Sulfonatstabilisierte Polyurethan-Dispersion auf Basis eines Phthalsäurean-hydrid-/Hexandiol-Polyesters, Hexandiol und Hexamethylendiisocyanat (Fest-körpergehalt der Dispersion ca. 50%). Das enthaltene Polymer ist nach der Trocknung amorph mit einem Glasübergang bei einer Glastemperatur Tg von-3,5°C.

### Beispiel 1 (erfindungsgemäß):

Zu 600 g der Dispersion VP KA 8481 werden unter Rühren langsam 400 g der Dispersion Dispercoll^{®} U 42 gegeben und solange gerührt, bis eine homogene Mischung entsteht. Anschliessend werden unter Anwendung des Thermoaktivierverfahrens und des Verfahrens der Nassverklebung entsprechende Prüfkörper hergestellt und die Schälfestigkeiten bestimmt (Beschreibung siehe oben).

### Beispiel 2 (Vergleich):

Mit VP KA 8481 werden unter Anwendung des Thermoaktivierverfahrens und des Verfahrens der Nassverklebung entsprechende Prüfkörper hergestellt und die Schälfestigkeiten bestimmt (Beschreibung siehe oben).

### Beispiel 3 (Vergleich):

Mit Dispercoll^{®} U 42 werden unter Anwendung des Thermoaktivierverfahrens und des Verfahrens der Nassverklebung entsprechende Prüfkörper hergestellt und die Schälfestigkeiten bestimmt (Beschreibung siehe oben).

**Tabelle 1**

| | Beispiel 1 (erfindungsgemäß) Mischung | Beispiel 2 (Vergleich) VP KA 8481 | Beispiel 3 (Vergleich) Dispercoll^{®} U42 |
|---|---|---|---|
| Schälwiderstand nach 3 d [N/mm] Buchenholz / Buchenholz Verfahren der Nassverklebung | 4,8 | 3,4 | 4,1 |
| Schälwiderstand nach 3 d [N/mm] Buchenholz / Hart-PVC-Folie Thermoaktivierfahren | 3,9 | 3,4 | 3,5 |

## Patentansprüche

1. Wässrige Dispersionen enthaltend eine Mischung aus
A) einer wässrigen Polyurethan- bzw. Polyurethan-Harnstoff-Dispersion enthaltend,
I. ein Polymer A) aufgebaut aus
I(i). mindestens einem difunktionellen aliphatischen Polyesterpolyol mit einem Molekulargewicht von 400 bis 5000 g/mol,
I(ii). mindestens einer Mischung aus Hexamethylendiisocyanat (HDI) und 1-Isocyanato-3,3,5-trimethyl-5-isocyanatomethyl-cyclohexan (IPDI) und
I(iii). mindestens einem Gemisch aus zwei oder mehr aminischen Kettenverlängeren, wobei zumindest eine Verbindung eine ionische Gruppe trägt,
wobei das Polymer A) nach der Trocknung teilkristallin oder kristallin ist mit einem Glasübergang bei einer Glastemperatur Tg zwischen -65°C und -40°C,
B) einer von A) verschiedenen wässrigen Polyurethan- bzw. Polyurethan-Harnstoff-Dispersion enthaltend,
II. ein Polymer B) aufgebaut aus
II(i). mindestens einem difunktionellen aromatischen Polyesterpolyols mit einem Molekulargewicht von 400 bis 5000 g/mol,
II(ii). mindestens einer difunktionellen Polyolkomponente mit einem Molekulargewicht von 62 bis 399,
II(iii). mindestens einem aliphatischen Diisocyanat und
II(iv). mindestens einem aminischen Kettenverlängerer mit einer ionischen Gruppe,
wobei das Polymer B) nach der Trocknung amorph ist mit einem Glasübergang bei einer Glastemperatur Tg zwischen -15°C und +10°.

2. Wässrige Dispersionen gemäß Anspruch 1, **dadurch gekennzeichnet, dass** diese eine Mischung aus 30 bis 90 Gew.-% der wässrigen Polyurethan- bzw. Polyurethan-Harnstoff-Dispersion, enthaltend Polymer A) und 10 bis 70 Gew.-% der wässrigen Polyurethan- bzw. Polyurethan-Harnstoff-Dispersion, enthaltend Polymer B) enthält.

3. Wässrige Dispersionen gemäß Anspruch 1, **dadurch gekennzeichnet, dass** das Molverhältnis HDI : IPDI zwischen 9:1 und 1:9 liegt.

4. Wässrige Dispersionen gemäß Anspruch 1, **dadurch gekennzeichnet, dass** Komponente A(Iiii) ein Gemisch aus 1,2-Ethandiamin und dem Natriumsalz der N-(2-Aminoethyl)-2-aminoethansulfonsäure ist.

5. Wässrige Dispersionen gemäß Anspruch 4, **dadurch gekennzeichnet, dass** das Gemisch in Komponente A(Iiii) in einem Molverhältnis zwischen 6:1 und 1:6 eingesetzt wird.

6. Wässrige Dispersionen gemäß Anspruch 1, **dadurch gekennzeichnet, dass** Komponente B(IIi) ein Polyesterpolyol auf Basis von o-Phthalsäure, o-Phthalsäureanhydrid und 1,4-Butandiol oder 1,6-Hexandiol ist.

7. Verfahren zur Herstellung der wässrigen Dispersionen gemäß Anspruch 1, **dadurch gekennzeichnet, dass** die wässrigen Polyurethan- bzw. Polyurethan-Harnstoff-Dispersion der Polymere A) bzw. B) miteinander gemischt werden.

8. Verwendung der wässrigen Dispersionen gemäß Anspruch 1 zur Herstellung von Klebstoffzusammensetzungen.

9. Zweikomponenten(2K)-Klebstoffzusammensetzungen, enthaltend wässrige Dispersionen gemäß Anspruch 1 und mindestens eine Polyisocyanatverbindungen mit mindestens zwei Isocyanatgruppen pro Molekül.

10. Klebstoffverbund, enthaltend mit den wässrigen Dispersionen gemäß Anspruch 1 verklebte Substrate und Flächengebilde.
